# EUROPEAN PATENT APPLICATION

(11) **EP 2 290 499 A1**
(43) Date of publication of application: **02.03.2011**
(21) Application number: 09010905.9
(22) Date of filing: 26.08.2009
(51) Int. Cl.: G06F 1/26, G06F 1/16

(54) **Detachable power converter for portable electronic devices**

(71) Applicant: Giga-Byte Technology Co., Ltd., Hsin-Tien Taipei-Hsien (TW)
(72) Inventor: Ma, Mou-Ming, Hsin-Tien Taipei-Hsien (TW); Liu, Yi-Yuan, Hsin-Tien Taipei-Hsien (TW); Kao, Chien-Chih, Hsin-Tien Taipei-Hsien (TW)
(74) Representative: Brandenburger, Karin

(57) **Abstract**

A portable electronic device includes a main body (1) and a power converter (3). The main body includes a first housing (10) and a main circuit disposed within the first housing. The main circuit includes a power input end located on a side surface (101) of the first housing. The power converter includes a second housing (30) and a power modulating circuit. A side surface (301) of the second housing is detachably assembled to the side surface of the first housing. The modulating circuit is disposed in the second housing, and includes a power output end and a utility power input end (312). The power output end is located on the side surface (301) of the second housing, and the utility power input end is located on another side surface (302) of the second housing. The power modulating circuit is capable of modulating utility power from the utility power input end to modulated power suitable for the main circuit, and the modulated power is outputted from the power output end. When the side surface of the second housing is assembled to the side surface of the first housing, the power output end on the second housing is electrically connected to the power input end on the first housing thereby transmitting the modulated power to the main circuit.

## Description

### BACKGROUND

The present disclosure relates generally to an external power supply for portable electronic devices, and particularly to a portable electronic device having integrated power converter.

Generally, the power supply of portable electronic devices (for example, notebook computers) is provided by batteries or power adapters which are capable of modulating commercial alternating power to direct current. However, batteries usually have limited capacity, and power adapters are usually additional accessories, which are inconvenient to carry.

Taiwan patent No. 555074 discloses an external power adapter for installing in a portable electronic device. A receiving space for assembling the external power adapter is defined in the portable electronic device to improve convenience of carrying. However, the external power adapter is fixed to the portable electronic device.

In addition, Taiwan patent No. 389424 also discloses a power adapter which is formed into a single member received in a slot of a portable computer to improve convenience to carry.

In another aspect, Taiwan patent 200803069 discloses a power adapter having an electrical cable rotatably and detachably mounted to a main body of the power adapter. Thus, the electrical cable and the main body of the power adapter can be separated for carrying.

### BRIEF SUMMARY

The present disclosure provides a portable electronic device having a detachably power converter. It is very convenient to carry the power converter together with the portable electronic device, and the portable electronic device also has improved appearance integration grade. In particular, the power converter can be optionally detached from the main body thereby reducing the weight of the portable electronic device.
The portable electronic device comprises a main body and a power converter. The main body includes a first housing and a main circuit disposed within the first housing and the main circuit includes a power input end located on a side surface of the first housing. The power converter includes a second housing and a power modulating circuit. A side surface of the second housing is detachably assembled to the side surface of the first housing. The modulating circuit is disposed in the second housing and includes a power output end and a utility power input end. The power output end is located on the side surface of the second housing and the utility power input end is located on another side surface of the second housing. The power modulating circuit is capable of modulating utility power from the utility power input end to modulated power suitable for the main circuit and the modulated power is outputted from the power output end. When the side surface of the second housing is assembled to the side surface of the first housing, the power output end on the second housing is electrically connected to the power input end on the first housing thereby transmitting the modulated power to the main circuit.

Because the power converter of the present portable electronic device is detachably assembled to the main body, thus it is very convenient to carry the power converter together with the portable electronic device when the power converter is required. In addition, the power converter can be detached from the main body when the power converter is not required to save space and reduce the weight of the portable electronic device.

Other aspects, details, and advantages of the present portable electronic device are further described as follows.

### BRIEF DESCRIPTION OF THE DRAWINGS

These and other features and advantages of the various embodiments disclosed herein will be better understood with respect to the following description and drawings, in which like numbers refer to like parts throughout, and in which:

Figure 1 is a schematic view illustrating a portable electronic device in accordance with an embodiment.

Figure 2 is an exploded view of the portable electronic device of Figure 1.

Figure 3 is a plane sketch of the portable electronic device of Figure 1.

Figure 4 is a schematic view illustrating a portable electronic device in accordance with another embodiment.

### DETAILED DESCRIPTION

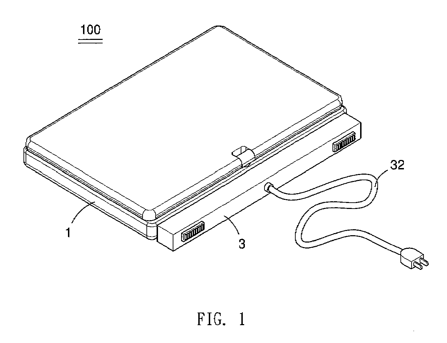

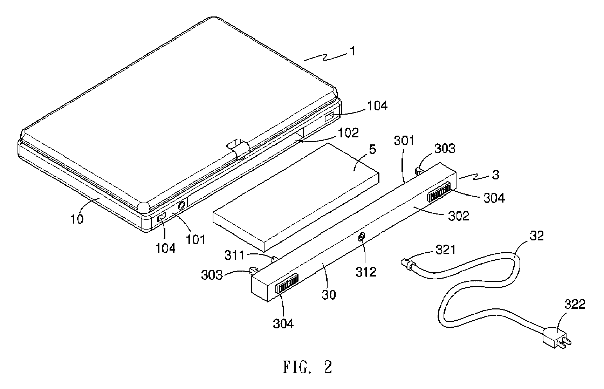

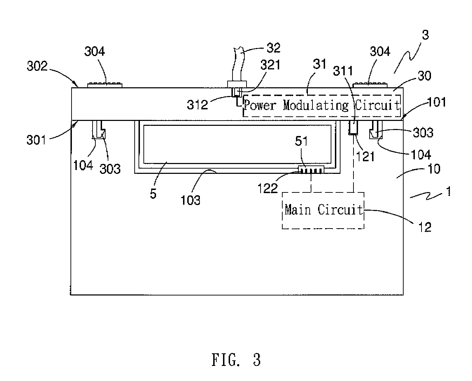

Figures 1 to 3 illustrates an embodiment of the present portable electronic device. The portable electronic device 100 includes a main body 1, a power converter 3, and an inner battery 5 (see Figure 3). As shown in Figure 2, the power converter is detachably mounted to a side surface 101 of the main body 1. In addition, referring to Figure 1, a length of the power converter is substantially same to that of the main body 1.

Referring to Figures 2 and 3, the main body 1 includes a first housing 10 and a main circuit 12 disposed within the first housing 10. The side surface 101 of the first housing 10 is configured for assembling the power converter 3, and the side surface 101 defines a groove 102 to an inner portion of the main body 1 for receiving the inner battery 5. The main circuit 12 includes a power input end 121 and a battery power input end 122 for receiving power from the power converter 3 and the inner battery 5 respectively. The power input end 121 of the main circuit 12 is disposed on the side surface 101 of the first housing 10, and the battery power input end 122 is disposed on an inner wall 103 of the groove 102. When assembled into the groove 102, an output end 51 of the inner battery 5 is electrically connected to the battery power input end 122 on the inner wall thereby the power from the inner battery 5 can be transmitted to the main circuit 12.

Referring to Figure 3, the power converter 3 includes a second housing 30, a power modulating circuit 31 and an electrical cable 32. A side surface 301 of the second housing 30 is detachably mounted to the side surface 101 of the first housing 10. The size (e.g., the length and width) of the side surface 301 of the first housing 30 are substantially same to that of the side surface 101 of the first housing 10. In addition, a latching hook 303 is formed on the side surface 301 of the second housing 30, and correspondingly, a latching hole 104 is defined in the side surface 101 of the first housing 10. Thus, the second housing 30 can be mounted to the side surface 101 of the first housing 10 by triggering a latching button 304 such that the latching hook 303 of the second housing 30 is latched in the latching hole 104 of the first housing 10. As such, the power converter 3 is assembled to the main body 1, and thus improves an appearance integration grade of the portable electronic device 100.

As shown in Figure 3, the electrical cable 32 connects a utility power supply (for example, an indoor electrical outlet) to the power converter 3 to transmit utility power to the power modulating circuit 31. The power modulating circuit 31 is disposed in the second housing 30, and has a power output end 311 and a utility power input end 312. The power output end 311 is located on the side surface 301 of the second housing 30, and the utility power input end 312 is located on another side surface 302 of the second housing 30. The utility power input end 312 is used to connect a power output connector 321 of the electrical cable 32. The power modulating circuit 31 is capable of modulating utility power from the utility power input end 312 to direct current suitable for the main circuit 12, and the direct current is supplied to the main circuit 12 via the power output end 311. When the side surface 301 of the second housing 30 is assembled to the side surface 101 of the first housing 10, the power output end 311 on the second housing 30 is electrically connected to the power input end 121 on the first housing 10 such that the power from the power modulating circuit 31 can be transmitted to the main circuit 12.

Referring to Figure 2, a power output connector 321 and a utility power plug 322 are respectively formed at two opposite ends of the electrical cable 32. The power output connector 32 is detachably connected to (for example, plugged into) the utility power input end 312 on the second housing 30. The utility power plug 31 is configured for connecting to an indoor electrical outlet (not shown). As such, the electrical cable 32 can be detached according to practical requirement, and it is very convenient to separately store the electrical cable 32.

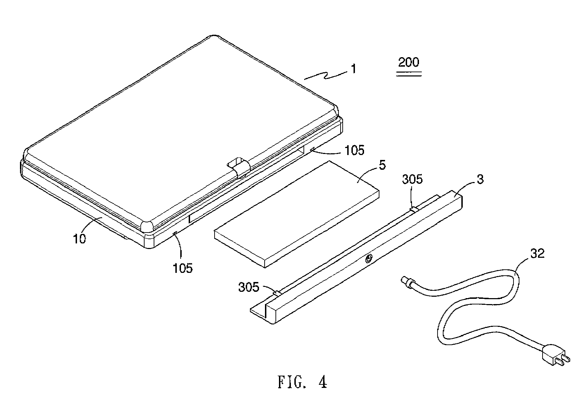

Figure 4 is a schematic view of a portable electronic device 200 in accordance with another embodiment. The portable electronic device 200 is similar to the portable electronic device 100 illustrated in Figures 1 to 3 except that the power converter 3 is assembled to the main body 1 using a slide rail to replace the latching mechanism (i.e., the latching hook 304 and the latching hole 104). In the present embodiment, the first housing 10 defines a slide groove or a dovetail groove 105, and correspondingly, a slide rail 305 structured to mate with the slide groove 105 is formed on the second housing 30. When the second housing 30 is assembled to the side surface 101 of the first housing 10, the slide rail 305 is received and positioned in the slide groove 105. The main body 1, the inner battery 5 and the electrical cable 32 of the power converter 3 are described in the embodiment associated with Figures 1 to 3, and won't be discussed here for concision purpose.

According to above description, it is understood that the power converter of the present portable electronic device is detachably assembled to the main body. Thus, it is very convenient to carry the power converter together with the main body when the power converter is required, and further, it also can be detached from the main body to reduce weight and safe space for the portable electronic device. In addition, the portable electronic device also has an improved appearance integration grade.

The above description is given by way of example, and not limitation. Given the above disclosure, one skilled in the art could devise variations that are within the scope and spirit of the disclosure disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A portable electronic device, comprising:
a main body, comprising a first housing and a main circuit disposed within the first housing, the main circuit comprising a power input end located on a side surface of the first housing; and
a power converter, comprising a second housing and a power modulating circuit; a side surface of the second housing being detachably assembled to the side surface of the first housing; the modulating circuit being disposed in the second housing, and comprising a power output end and a utility power input end; the power output end being located on the side surface of the second housing, the utility power input end being located on another side surface of the second housing; the power modulating circuit being capable of modulating utility power from the utility power input end to modulated power suitable for the main circuit, and the modulated power being outputted from the power output end;
wherein when the side surface of the second housing is assembled to the side surface of the first housing, the power output end on the second housing is electrically connected to the power input end on the first housing thereby transmitting the modulated power to the main circuit.

2. The portable electronic device of claim 1, wherein the size of the second housing is substantially same to that of the side surface of the first housing.

3. The portable electronic device of claim 1, wherein the side surface of the first housing defines a latching hole, and a latching hook is formed on the side surface of the second housing; when the second housing is assembled to the side surface of the first housing the latching hook is latched in the latching hole.

4. The portable electronic device of claim 1, wherein the first housing defines a slide groove, and a slide rail structured to mate with the slide groove is formed on the second housing;
when the second housing is assembled to the side surface of the first housing the slide rail is received in the slide groove.

5. The portable electronic device of claim 1, further comprising a battery, the first housing defining a groove and the battery being received in the groove, the main circuit comprising a battery power input end formed on an inner wall of the groove; when the battery is assembled into the groove, an output end of the battery is electrically connected to the battery power input end on the inner wall thereby transmitting power from the battery to the main circuit.

6. The portable electronic device of claim 1, wherein the power converter further comprises an electrical cable for supplying utility power to the power modulating circuit; a power output connector and a utility power plug are respectively formed on two ends of the electrical cable; the power output connector of the electrical cable is detachably connected to the utility power input end on the second housing, and the utility power plug is configured for connecting to a utility power supply.
